# EUROPÄISCHE PATENTANMELDUNG

(11) **EP 0 878 888 A2**
(43) Veröffentlichungstag der Anmeldung: **18.11.1998**
(21) Anmeldenummer: 98105073.5
(22) Anmeldetag: 20.03.1998
(51) Int. Cl.: H02G 15/22, H02G 15/06

(54) **Kabelendverschluss**

(30) Priorität: 14.05.1997 DE 19720092
(71) Anmelder: ABB PATENT GmbH, 68309 Mannheim (DE)
(72) Erfinder: Schumacher, Martin, Dr.-Ing., 63517 Rodenbach (DE)
(74) Vertreter: Rupprecht, Klaus, Dipl.-Ing.

(57) **Zusammenfassung**

Ein ein-, zwei- oder dreiphasiger Kabelendverschluß besitzt eine Flanschplatte (18), an der Isolierkörper (25, 34) einstückig angeformt sind. Isolierkörper (25, 34) bilden somit mit der Flanschplatte (18) eine aus Gießharz hergestellte Einheit.

## Beschreibung

Die Erfindung betrifft einen wenigstens einphasigen Kabelendverschluß gemäß dem Oberbegriff des Anspruches 1.

Ein derartiger Kabelendverschluß, mit dem Stromleiterpfade aus der Metallkapselung nach außen zu Anschlußkabeln herausgeführt sind, besitzen eine Flanschplatte, die an einem Flansch der Metallkapselung befestigt werden kann; mit der Flanschplatte sind eine der Anzahl der Phasen entsprechende Anzahl von Isolierkörpern verbindbar, wobei die Isolierkörper an der Flanschplatte mittels einer Schraubenverbindung befestigbar sind. Zu diesem Zweck besitzt die Flanschplatte Öffnungen, durch die an dem Isolierkörper angeformte Kragen hindurchgesteckt werden, so daß eine Führung der Isolierkörper bewirkt wird.

Aufgabe der Erfindung ist es, einen Kabelendverschluß der eingangs genannten Art zu vereinfachen.

Diese Aufgabe wird erfindungsgemäß durch die kennzeichnenden Merkmale des Anspruches 1 gelöst.

Erfindungsgemäß also ist an der Flanschplatte eine der Anzahl der Phasen entsprechende Anzahl von Isolierkörpern angeformt, so daß die Flanschplatte mit den Isolierkörpern eine einstückige Einheit bilden.

Dadurch werden Probleme der Lagerhaltung vereinfacht, da lediglich ein Kabelendverschluß auf Lager gehalten werden muß.

Dabei besteht die Möglichkeit, den Kabelendverschluß einphasig, zweiphasig oder auch dreiphasig auszubilden.

Die Isolierkörper und die Flanschplatte sind in besonders vorteilhafter Weise aus Gießharz hergestellt und können ggf. mit einem Füllstoff, vorzugsweise einem Al₂O₃-Fülltstoff versehen sein.

Anhand der Zeichnung, in der ein Ausführungsbeispiel der Erfindung dargestellt ist, sollen die Erfindung sowie weitere vorteilhafte Ausgestaltungen und Verbesserungen der Erfindung näher erläutert und beschrieben werden.

Es zeigen:
- Fig. 1: eine Schnittansicht durch den Kabelendverschluß gemäß Schnittlinie I-I der Fig. 2, und
- Fig. 2: eine Schnittansicht gemäß der Schnittlinie II-II der Fig. 1.

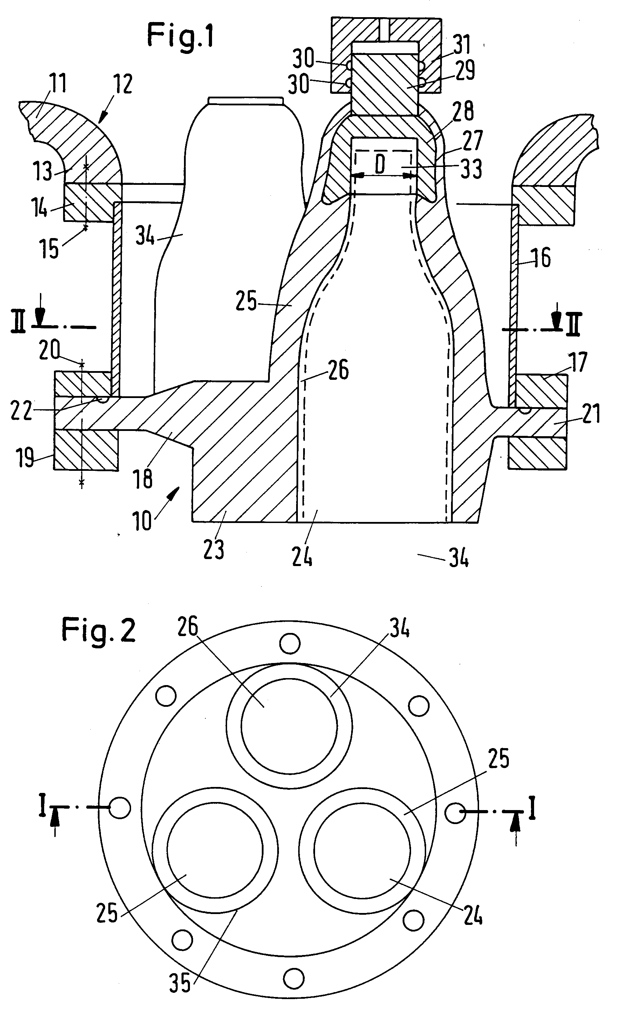

Der Kabelendverschluß gemäß der Fig. 1 ist mit dem Kapselungsgehäuse 11 einer metallgekapselten, gasisolierten Hochspannungsanlage 12 verbunden. Das Kapselungsgehäuse 11 besitzt einen Flanschstutzen 13, an dem ein erster Anschlußflansch 14 mittels einer Schraubverbindung 15 befestigt ist. An dem ersten Halteflansch 14 ist ein Gehäuserohr 16 festgeschweißt, dessen freies Ende mit einem zweiten Halteflansch 17 ebenfalls durch Schweißverbindung fest verbunden ist. An der Außenseite des Halteflansches 17 ist eine Flanschplatte 18 mittels eines Halteringes 19, ebenfalls mit einer Schraubenverbindung 20 befestigt. Die Flanschplatte 18 besitzt einen Flanschrand 21, der zwischen dem Halteflansch 17 und dem Flanschring 19 fixiert ist und der auf seiner dem Halteflansch 17 zugewandten Fläche eine Dichtring 22 aufweist. Die Flanschplatte 18 besitzt auf der der Metallkapselung 11 entgegengesetzten Seite einen zylindrischen Vorsprung 23, in den drei Öffnungen 24, 25 und 26 eingebracht sind. Lediglich in Fig. 1 ist die Öffnung 24 zu sehen. Auf der Innenseite, also der der Metallkapselung 11 zugewandten Fläche des Halteflansches 18 ist ein etwa birnenförmiger, zylinderförmiger Isolierkörper 25 angeformt und springt von dort nach innen vor, wobei der Innendurchmesser des Isolierkörpers im Bereich der Übergangsstelle 26 von Flanschplatte 18 zu Isolierkörper 25 dem Innendurchmesser der Öffnung 24 entspricht. Der Innendurchmesser verengt sich auf ein Maß D, und in diesem Bereich 27 mit dem verkleinerten Innendurchmesser D ist in den Isolierkörper 25 eine Kabelanschlußkontaktbuchse 28 eingegossen, die in einem bezogen auf den Isolierkörper 25 axial vorspringenden Zapfen 29 endet, der von einem mit Spiralkontaktfedern 30 versehenen Kontakttopf 31 im montierten Zustand umgeben ist. Die Anschlußkontaktbuchse 28 umgibt dabei einen Buchsenraum 32, in den der strichlierte Anschlußstecker des ebenfalls strichliert gezeichneten Kabels 34 eingreift.

Die Fig. 2 zeigt, daß drei Öffnungen 24 bis 26 vorgesehen sind, so daß der Kabelendverschluß 10 für drei Phasen Verwendung finden kann. Der Öffnung 26 ist der Isolierkörper 34 zugeordnet, der ebenfalls mit der Flanschplatte 18 einstückig verbunden ist. Der der Öffnung 25 zugeordnete Isolierkörper 35 ist in der Fig. 1 nicht sichtbar.

## Patentansprüche

1. Wenigstens einphasiger Kabelendverschluß für eine metallgekapselte, gasisolierte Hochspannungsanlage, mit dem eine der Anzahl der Phasen innerhalb der Kapselung entsprechende Anzahl von elektrischen Stromleiterpfaden aus der Metallkapselung zu Anschlußkabeln geführt ist, mit einer Flanschplatte, die an einem Halteflansch der Metallkapselung befestigbar ist und die Öffnungen aufweist, durch die hindurch mit den Kabeln verbundene Kabelanschlußstecker mit innerhalb der Kapselung befindlichen Kabelanschlußkontaktbuchsen in Verbindung bringbar sind, dadurch gekennzeichnet, daß an der Flanschplatte (18) eine der Anzahl der Phasen entsprechende Anzahl von die Öffnungen (24 bis 26) umgebenden, etwa zylinderförmigen Isolierkörpern (25, 34) angeformt ist, die von der Flanschplatte (18) aus nach innen vorspringen und in deren freien Enden die Kabelanschlußkontaktbuchsen (28) wenigstens teilweise eingegossen sind.

2. Kabelendverschluß nach Anspruch 1, dadurch gekennzeichnet, daß drei Isolierkörper (25, 34) mit den Kabelanschlußkontaktbuchsen an der Flanschplatte (18) angeformt sind.

3. Kabelendverschluß nach einem der Ansprüche 1 oder 2, dadurch gekennzeichnet, daß die Isolierkörper (25, 34) und die Flanschplatte (18) aus Gießharz ggf. mit einem Füllstoff, vorzugsweise einem Al₂O₃-Füllstoff, bestehen.
